# EUROPÄISCHE PATENTSCHRIFT

(11) **EP 1 072 918 B1**
(45) Veröffentlichungstag und Bekanntmachung des Hinweises auf die Patenterteilung: **30.03.2005**
(21) Anmeldenummer: 00810624.7
(22) Anmeldetag: 14.07.2000
(51) Int. Cl.: G02B 6/38

(54) **Steckerteil für eine optische Steckverbindung**
Connector part for optical connection
Elément de connecteur pour connexion optique

(30) Priorität: 26.07.1999 EP 99810667; 15.06.2000 EP 00810519
(43) Veröffentlichungstag der Anmeldung: 31.01.2001
(73) Patentinhaber: Diamond SA, 6616 Losone (CH)
(72) Erfinder: De Marchi, Silverio, 6612 Ascona (CH)
(74) Vertreter: Wenger, René

(56) Entgegenhaltungen:
- US-A- 4 737 008
- US-A- 4 759 599
- US-A- 4 873 614
- US-A- 5 011 424
- US-A- 5 883 995

## Beschreibung

Die Erfindung betrifft ein Steckerteil für eine optische Steckverbindung gemäss dem Oberbegriff von Anspruch 1.

Im Gegensatz zu elektrischen Steckverbindungen spielt bei optischen Steckverbindungen die passgenaue Position des Steckerstifts eine bedeutende Rolle für die Qualität der Übertragungsleistung. Das Verriegelungselement hat daher die Aufgabe, das Steckerteil zugfest im Buchsenteil zu verriegeln. Die Verriegelung erfolgt dabei in der Regel selbständig beim Erreichen der endgültigen Einsteckposition. Zum Ausstecken des Steckerteils muss eine manuelle Entriegelungsbewegung ausgeführt werden.

Bei den gattungsmässig vergleichbaren Steckerteilen ist das Verriegelungselement in der Regel einstückig mit dem Steckergehäuse ausgebildet. Es hat dabei die Form eines Hebels, der über ein Biegegelenk federnd mit dem Gehäuse verbunden ist und an dessen Ende Sperrklinken oder andere Verriegelungselemente angeordnet sind. Ein Beispiel für ein derartiges Steckerteil ist in der WO 98/53347 dargestellt und beschrieben. Ein Nachteil dieser Ausführung besteht jedoch darin, dass das Steckergehäuse als aufwendiges Spritzgussteil hergestellt werden muss. Das Biegegelenk kann mit der Zeit erlahmen, sodass das Verriegelungselement seine Funktion nicht mehr ausüben kann. Ausserdem ist ein Kunststoffmaterial mit geeigneten Biegeeigenschaften nicht notwendigerweise gut geeignet für das Steckergehäuse.

Es sind aber auch bereits Steckerteile bekannt, bei denen Verriegelungselemente als separate Bauteile Anwendung finden. So zeigt die US-A-4,759,599 einen optischen Stecker, der zur Verriegelung mit einem Buchsenteil mit einem sich zangenartig öffnenden und unter Federvorspannung stehenden Verriegelungsmechanismus versehen ist. Dieser besteht aus einem Hebelpaar, das an Achsen schwenkbar gelagert ist, wobei an jedem Hebel eine Torsionsfeder angreift. Diese Bauweise ist relativ aufwendig und für die Entriegelung des Steckerteils müssen beide Einzelhebel gleichförmig betätigt werden. Bei hoher Packungsdichte der Stecker ist dies schon aus Platzgründen nicht möglich. Ähnliche Verriegelungsmechanismen mit sich gegensinnig öffnenden Hebelpaaren sind auch in der US-A-4,737,008 oder in der US-A-5,154,629 offenbart Einstückig ausgebildete Rückhalteelemente mit integriertem Federabschnitt werden gemäss US-A-5,011,424 auch schon an elektrischen Steckverbindungen eingesetzt. Ebenso zur Fixierung von elektrischen Einschubmodulen gemäss US-A-4,873,614.

Es ist daher eine Aufgabe der Erfindung, ein Steckerteil der Eingangs genannten Art zu schaffen, das mit einem einfach herzustellenden und gut funktionierenden Verriegelungselement versehen ist. Das Verriegelungselement soll ausserdem gut bedienbar sein und es soll die Handhabung des Steckerteils nicht durch vorstehende Teile und dergleichen behindern. Die Aufgabe wird erfindungsgemäss mit einem Steckerteil gelöst, das die Merkmale im Anspruch 1 aufweist.

Das an einem Drehgelenk schwenkbar am Steckerteil befestigte Verriegelungselement stützt sich federnd auf dem Steckergehäuse ab. Eine in sich federnde Verbindung über ein Biegegelenk ist daher nicht erforderlich. Das Verriegelungselement ist als einstückiges Biegeteil aus Metall ausgebildet Abnützungserscheinungen treten dabei auch nach zahlreichen Betätigungen nicht auf.

Das Verriegelungselement ist auf das Steckergehäuse aufgeschnappt, womit die Montage bzw. das Ersetzen eines Verriegelungselements wesentlich erleichtert wird. Eine besonders vorteilhafte Schnappverbindung wird dadurch erzielt, dass das Steckergehäuse ein Paar Gelenknocken aufweist und dass das Verriegelungselement ein Paar korrespondierende Ausnehmungen aufweise, in welche die Gelenknocken eingreifen.

Eine vorteilhafte Federung des Verriegelungselements kann erreicht werden, wenn der Federabschnitt eine Blattfeder aufweist, deren eines Ende derart auf dem Steckergehäuse aufliegt, dass die Blattfeder das Verriegelungselement in eine Verriegelungsposition vorspannt.

An dem Biegeteil aus Metall kann die Blattfeder leicht integriert werden und derartige Biegeteile lassen sich in grossen Stückzahlen preiswert herstellen. An den freien Enden der Arme sind die Sperrklinken in der Form von Abwinklungen angeordnet. Die Sperrklinken verlaufen dabei unter einem spitzen Winkel zur Längsmittelachse des Steckerteils und bilden auf diese Weise Rampen, an denen die Arme beim Einstecken in ein Buchsenteil gegen die Federkraft schwenkbar sind.

In bestimmten Fällen ist es aus Platzgründen zweckmässig, wenn die Arme beim Schwenken des Verriegelungselements gegen die Federvorspannung wenigstens teilweise in korrespondierende Vertiefungen am Steckergehäuse eintauchen.

Das Verriegelungselement ist vorteilhaft am kabelseitigen Ende des Steckerteils angelenkt. Auf diese Weise lässt es sich leicht mit dem Daumen am Griffstück betätigen. Auch eine Anlenkung am steckerstirnseitigen Ende des Steckerteils wäre aber grundsätzlich möglich.

Eine optische Steckverbindung wird mit Hilfe des beschriebenen Steckerteils zusammen mit einem Buchsenteil hergestellt, das wenigstens eine Buchse zur Aufnahme des Steckerstifts aufweist, wobei die Sperrklinken des Verriegelungselements beim Erreichen der endgültigen Einsteckposition in wenigstens eine Hinterschneidung am Buchsenteil einrasten. Es ist dabei ohne weiteres möglich, das ein erfindungsgemässes Steckerteil mit einem konventionellen Buchsenteil kombiniert wird.

Ein besonderer Vorteil kann erreicht werden, wenn das Buchsenteil einen Oberflächenabschnitt über der Einstecköffnung aufweist, der mit einem Oberflächenabschnitt am Griffstück des Verriegelungselements einen stumpfen Winkel einschliesst, wobei die Oberflächenabschnitte im wesentlichen stufenlos aneinander anschliessen. Bei dieser Anordnung entstehen keinerlei hakenartige Vorsprünge, an denen sich die relativ dünnen Lichtwellenleiterkabel verhaken könnten.

Das Buchsenteil ist besonders vorteilhaft aus zwei gleichen Gehäusehälften zusammengesetzt, welche zwischen sich die eigentliche Buchse aufnehmen. An einem derartigen Buchsenteil lassen sich auch die für das Verriegelungselement erforderlichen Hinterschneidungen aus giesstechnischen Gründen besonders einfach herstellen.

Weitere Vorteile ergeben sich, wenn wenigstens eine Einstecköffnung des Buchsenteils mit einer schwenkbaren Schutzklappe versehen ist, welche mittels einer das Buchsengehäuse und die Schutzklappe durchdringenden Achse angelenkt ist. Ähnlich wie beim Steckerteil, verhindert die Schutzklappe auch am Buchsenteil das Austreten von Laserlicht. Die Anlenkung mittels einer Achse ist auch bei schwierigen Platzverhältnissen möglich und gewährleistet eine sichere Verbindung zwischen Schutzklappe und Gehäuse. Die Schutzklappe kann dabei mittels einer Feder vorgespannt sein, welche auf der Achse sitzt. Dabei handelt es sich vorteilhaft um eine Schraubendrehfeder.

Eine besonders einfach Sicherung bezüglich der Relativlage zwischen Schutzklappe, Feder und Achse kann erreicht werden, wenn die Achse eine umlaufende Nut aufweist und wenn die Schutzklappe mit einem Sporn versehen ist, der zur seitlichen Fixierung der Achse in die Nut eingreift.

Auch die Schutzklappe kann vorteilhaft als Biegeteil aus Metall ausgebildet sein.

Am Buchsenteil können auf beiden Seiten der Einstecköffnung zwei Hinterschneidungen für das Verriegelungselement in der Form von Nocken angeordnet sein, wobei die Schutzklappe bei ausgestecktem Steckerteil an den Nocken anliegt. Die Nocken erfüllen auf diese Weise eine Doppelfunktion als Begrenzungselemente für die unter Federvorspannung stehende Schutzklappe und als Widerlager für das Verriegelungselement.

Einzelne der vorstehend genannten Merkmale am Buchsenteil könnten auch in Kombination mit konventionellen Steckerteilen realisiert werden. Dies betrifft insbesondere die zweiteilige Gehäusekoristruktion und/oder die Ausbildung der Schutzklappen.

Ausführungsbeispiele der Erfindung sind in den Zeichnungen dargestellt und werden nachstehend genauer beschrieben. Es zeigen:
- Figur 1: eine Seitenansicht eines Steckerteils mit den Merkmalen der Erfindung,
- Figur 2: eine Draufsicht auf das Steckerteil gemäss Figur 1,
- Figur 3: eine Ansicht der Stirnseite des Steckerteils gemäss Figur 1,
- Figur 4: eine Explosionszeichnung des Steckerteils gemäss Figur 1,
- Figur 5: ein Längsschnitt durch das Steckerteil gemäss Figur 1 in etwas vergrösserter Darstellung,
- Figur 6: eine perspektivische Darstellung des Steckerteils gemäss Figur 1,
- Figur 7: das Steckerteil gemäss Figur 6 mit geöffneter Schutzklappe,
- Figur 8: eine Draufsicht auf die Einstecköffnung eines Buchsenteils,
- Figur 9: eine teilweise aufgeschnittene perspektivische Darstellung eines Verriegelungselements,
- Figur 10a bis 10d: ein Einsteckvorgang an einem Buchsenteil in vier verschiedenen Sequenzen,
- Figur 11: eine perspektivische Darstellung eines alternativen Steckerteils,
- Figur 12: eine Explosionszeichnung der äusseren Steckerteile des Steckerteils gemäss Figur 11,
- Figur 13: ein Längsschnitt durch das Steckerteil gemäss Figur 11,
- Figur 14: eine Explosionszeichnung eines Buchsenteils,
- Figur 15: eine perspektivische Darstellung des Buchsenteils gemäss Figur 14 im zusammengebauten Zustand, und
- Figur 16: ein Längsschnitt durch das Buchsenteil gemäss Figur 15.

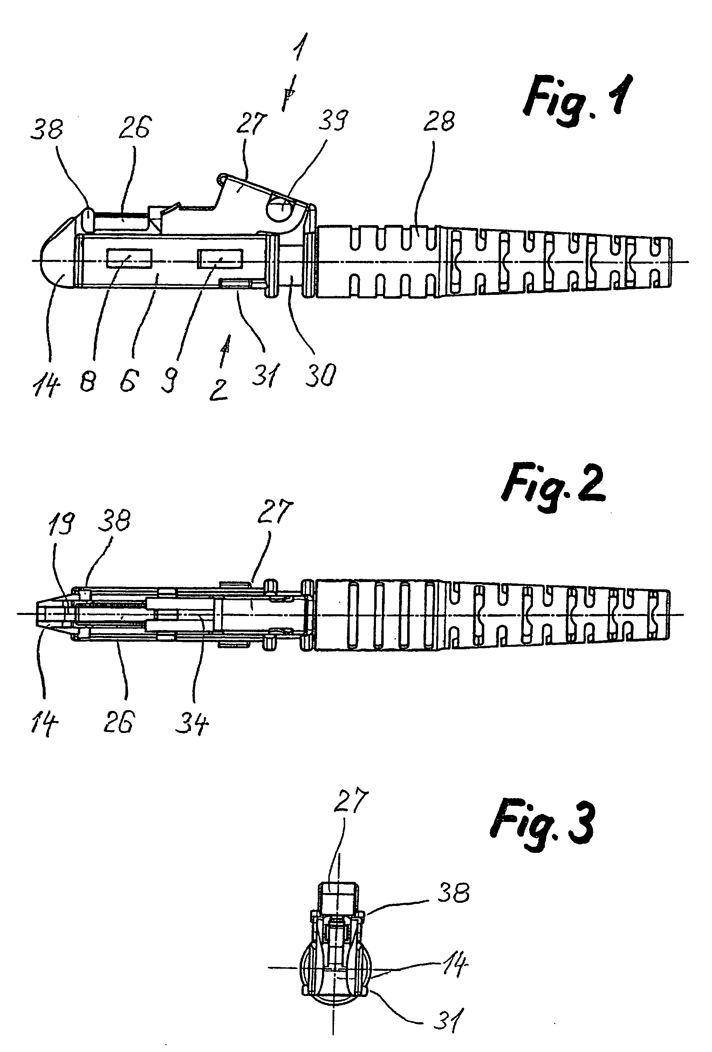

Wie in den Figuren 1 bis 4 dargestellt, besteht ein Steckerteil 1 im wesentlichen aus einem Stekkergehäuse 2, das in ein steckerstirnseitiges Gehäuseteil 4 und in ein kabelseitiges Gehäuseteil 5 aufgeteilt ist. Das Steckergehäuse enthält dabei einen Steckerstift 3, der in Richtung der Längsmittelachse 34 federnd gelagert ist. Selbstverständlich wäre es auch denkbar, dass im gleichen Steckergehäuse mehrere Steckerstifte gehalten sind.

Der Steckerstift 3 ist in einer Stifthalterung 29 fixiert, welche auf der gegenüberliegenden Seite das optische Kabel aufnimmt. Dieses ist aus Gründen der besseren Übersichtlichkeit jedoch hier nicht dargestellt. Ein flexibler Kabelknickschutz 28 begrenzt auf bekannte Weise den zulässigen Biegeradius am Kabel. Auf der Stifthalterung 29 ist eine Schraubendruckfeder 11 gelagert, welche einerseits am kabelseitigen Gehäuseteil 5 und andererseits am mehreckig ausgebildeten Kopfende 35 der Stifthalterung abgestützt ist.

Die beiden Gehäuseteile 4 und 5 werden mit Hilfe eines Bügels 6 zusammengehalten, der etwa U-förmig ausgebildet. In beiden U-Schenkeln sind dabei je zwei rechteckige Aussparungen 7a, 7b angeordnet. Diese übergreifen je eine korrespondierende Erhebung 8, 9 auf den beiden Seitenwänden des steckerstirnseitigen Gehäuseteils 4 bzw. des kabelseitigen Gehäuseteils 5.

Die beiden Gehäuseteile 4 und 5 sind derart ausgebildet, dass die aneinander liegenden Berührungsflächen gleichzeitig eine Verdrehsicherung bewirken. So ist das Gehäuseteil 4 mit einer sich keilartig verjüngenden Sicherungsnase 12 versehen, welche in eine korrespondierende Ausnehmung 13 am Gehäuseteil 5 eingreift und sich dort leicht verkeilt. Die leichte Verkeilung bewirkt eine völlig spielfrei Verbindung zwischen den Gehäuseteilen. Am Gehäuseteil 5 sind zudem seitliche Stabilisierungsnocken 31 angeordnet, an denen sich der Bügel 6 zusätzlich abstützt. An einem Halsabschnitt 30 können zwei Steckerteil mit Hilfe einer hier nicht dargestellten Klammer zu einem Duplexstecker kombiniert werden.

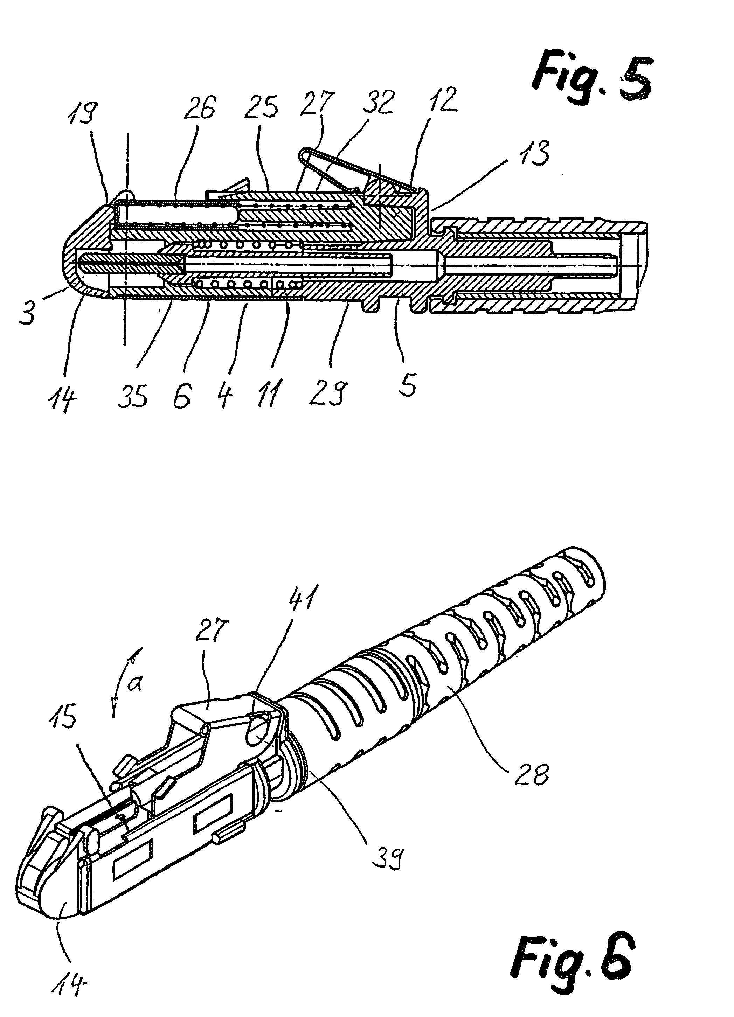

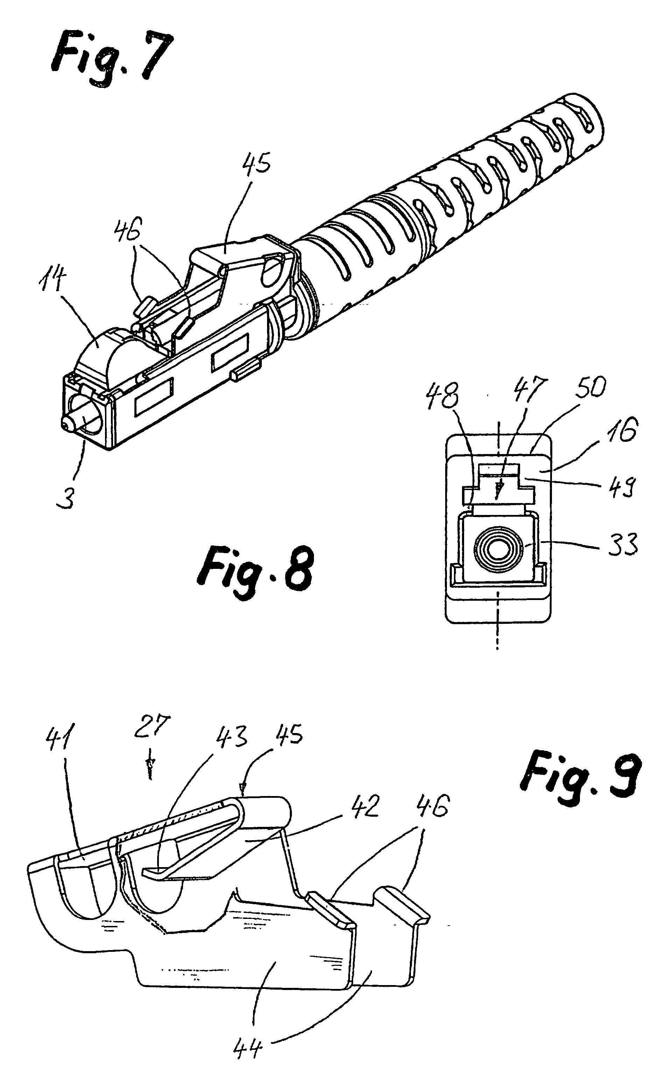

Die Steckerstirnseite ist im ungesteckten Zustand stets mit einer Schutzklappe 14 verschlossen. Diese verfügt über eine Gelenkgabel 18 mit seitlich daran angeordneten, voneinander wegweisenden Gelenknocken 17. Diese Gelenknocken sind in einer Führungsbahn 15 schwenkbar (Figur 6) und verschiebbar gelagert. Die Schutzklappe 14 kann dabei in dem etwa um 90° aufgeschwenkten Zustand auf der Oberseite des Steckergehäuses zurückgeschoben werden, sodass sie im Buchsenteil weniger Platz beansprucht und den Steckvorgang nicht behindert. Die vollständige Öffnungsposition ist in Figur 7 dargestellt, die jedoch unter normalen Umständen nur im korrespondierenden Buchsenteil erreicht wird.

Die Führungsbahn 15 wird einerseits durch je einen Oberflächenabschnitt am Gehäuseteil 4 und durch die Unterseite einer Abwinklung 23 des Bügels 6 gebildet. Jeder U-Schenkel 22 ist dabei soweit abgewinkelt, dass er die Gelenknocken 17 ausreichend übergreift. Die Schutzklappe 14 wird mittels einer Schraubendruckfeder 25 in die Schliessposition vorgespannt. Diese Feder sitzt auf einem Federdorn 32 am Gehäuseteil 4. Die Beaufschlagung der Schutzklappe erfolgt indirekt über einen Stössel 26, der die Schraubendruckfeder teilweise umgibt. Die Stösselstirnseite berührt in jeder Position der Schutzklappe einen Hebelarm 19, der über die Ebene der Gelenknokken 17 hinausragt.

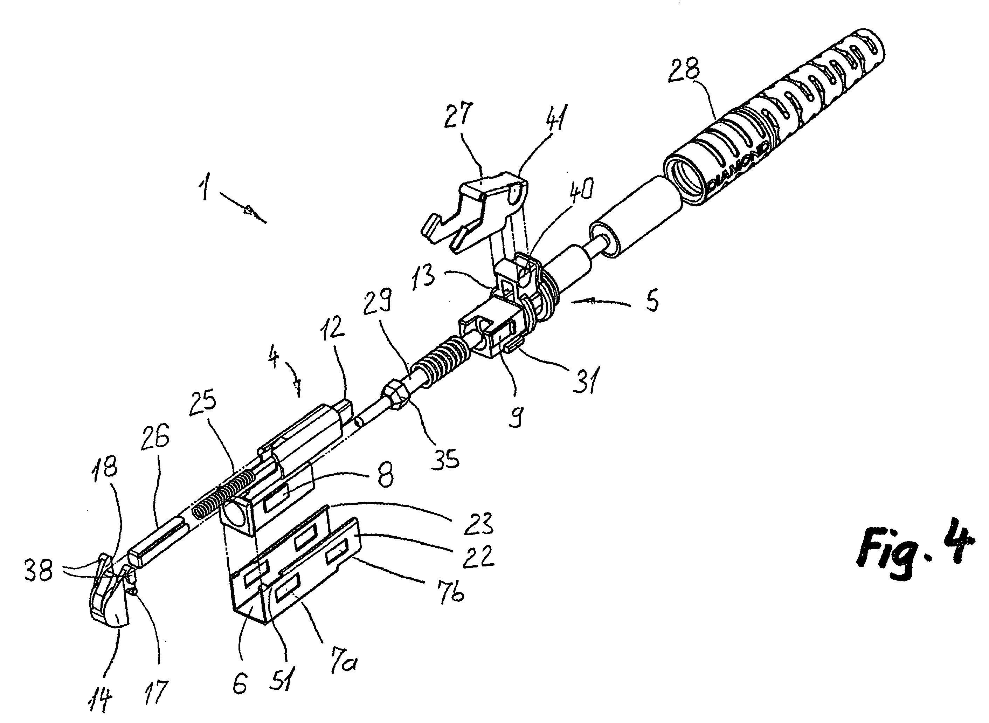

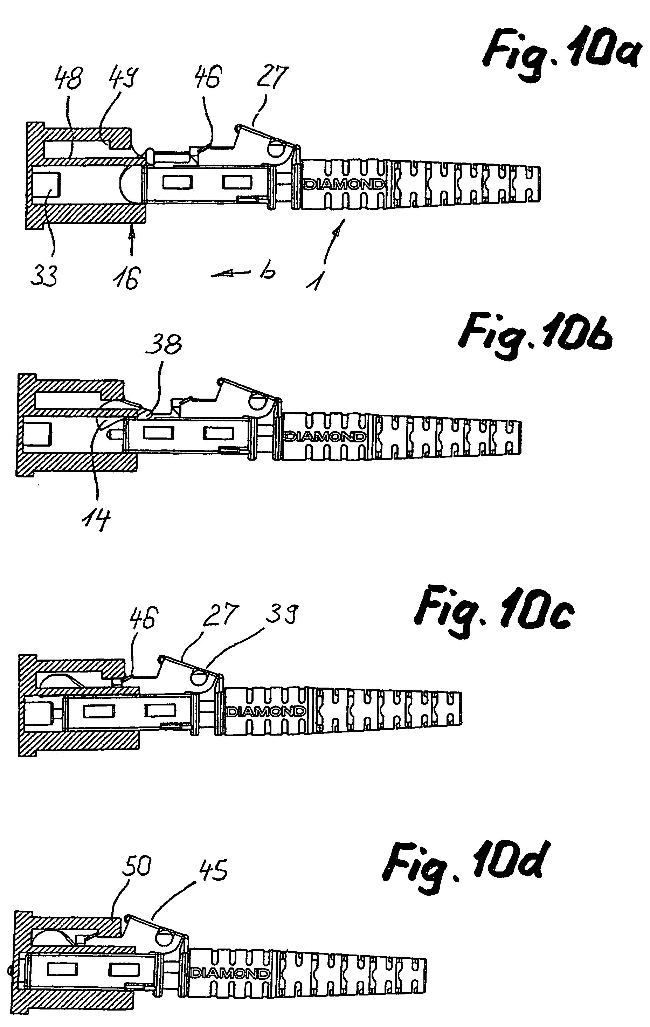

Die Steuerung der Schutzklappe 14 beim Einstecken in ein Buchsenteil 16 (Figuren 10a bis 10d) erfolgt an einem Steuernockenpaar 38, das ebenfalls an der Gelenkgabel 18 über den Gelenknocken 17 angeordnet ist (Fig. 4). Das Buchsenteil 16 enthält die eigentliche Buchse 33, welche den Steckerstift 3 passgenau aufnimmt. In der einmal aufgeschwenkten Position bleibt die Schutzklappe 14 relativ zum Buchsenteil 16 stehen, während das Steckerteil weiter eingeschoben wird. Damit auch das Steuernockenpaar oder wenigstens einer der Steuernocken in die Führungsbahn 15 eintauchen kann, sind am Bügel 6 korrespondierende Ausnehmungen 51 vorgesehen.

Die Verriegelung des Steckerteils im Buchsenteil erfolgt mit Hilfe eines Verriegelungselements 27, das als einstückiges Biegeteil aus Metall ausgebildet ist dessen Aufbau in Figur 9 genauer dargestellt ist. Das Biegeteil beispielsweise aus Stahl verfügt über zwei etwa parallele, flächige Arme 44, an deren Ende je eine nach aussen gerichtete Abwinklung 46 angeordnet sind. Diese Abwinklungen bilden eine Sperrklinkenpaar und sie sind derart unter einem Winkel zur Längsmittelachse 34 angeordnet, dass die Arme 44 beim Einstekken in das Buchsenteil 16 gegen die Federkraft niedergedrückt werden.

Die Verbindung der beiden Arme 44 erfolgt über ein Griffstück 45, an dem eine Blattfeder 42 angeordnet ist. Die Blattfeder erstreckt sich nach unten zwischen die beiden Arme 44 und ihr Ende 43 ist derart ausgebildet, dass es gleitend mit der Oberfläche des Steckergehäuses zusammenwirken kann.

In den Armen 44 sind seitliche Aussparungen 41 angeordnet. Diese übergreifen seitliche Gelenknocken 40 am Steckerteil 5. Die Gelenknocken 40 sind in der oberen Hälfte etwas angeschrägt, womit das Aufschnappen des Verriegelungselements 27 erleichtert wird. Auf diese Weise wird ein Drehgelenk 39 gebildet, um welches das Verriegelungselement 27 gegen die Kraft der Blattfeder 42 in Pfeilrichtung a schwenkbar ist. Beim Niederdrücken des Verriegelungelements tauchen dabei die beiden Arme 44 in die Führungsbahn 15 ein. Der U-förmige Bügel 6 dient auf diese Weise zusätzlich als Schutz und Führung der Arme 44.

Das Buchsenteil 16 verfügt gemäss Figur 8 über eine Einstecköffnung 47 mit einer speziellen Konfiguration. Auf beiden Seitenwänden sind Seitenleisten 48 angeordnet. Unmittelbar hinter der Einstecköffnung werden an der Oberseite Hinterschneidungen 49 gebildet, in denen die Sperrklinken 46 des Verriegelungselements einrasten können.

Ein Einsteckvorgang ist in den Figur 10a bis 10d im Detail dargestellt. Das Steckerteil 1 wird dabei lagerichtig an das Buchsenteil 16 angesetzt und in Pfeilrichtung b gegen die Buchse 33 geschoben. Dabei werden die Steuernocken 38 durch die Seitenleisten 48 zurückgeschwenkt und die Schutzklappe 14 beginnt ihre Öffnungsbewegung. Sobald die Sperrklinken 46 den Mündungsbereich des Buchsenteils erreichen, wird das Verriegelungselement 27 um das Drehgelenk 39 niedergeschwenkt. Sobald die Sperrklinken die Hinterschneidung 49 erreicht haben, rasten sie unter der Federkraft dort ein. In dieser Position hat das Steckerteil 1 die endgültige Einsteckposition erreicht.

Aus Figur 10d ist ersichtlich, dass ein Oberflächenabschnitt 50 über der Einstecköffnung 47 zusammen mit dem Griffstück 45 einen stumpfen Winkel einschliesst. Das Griffstück schliesst sich dabei annähernd nahtlos an den Oberflächenabschnitt 50 an, sodass sich keine Kabel verhaken können.

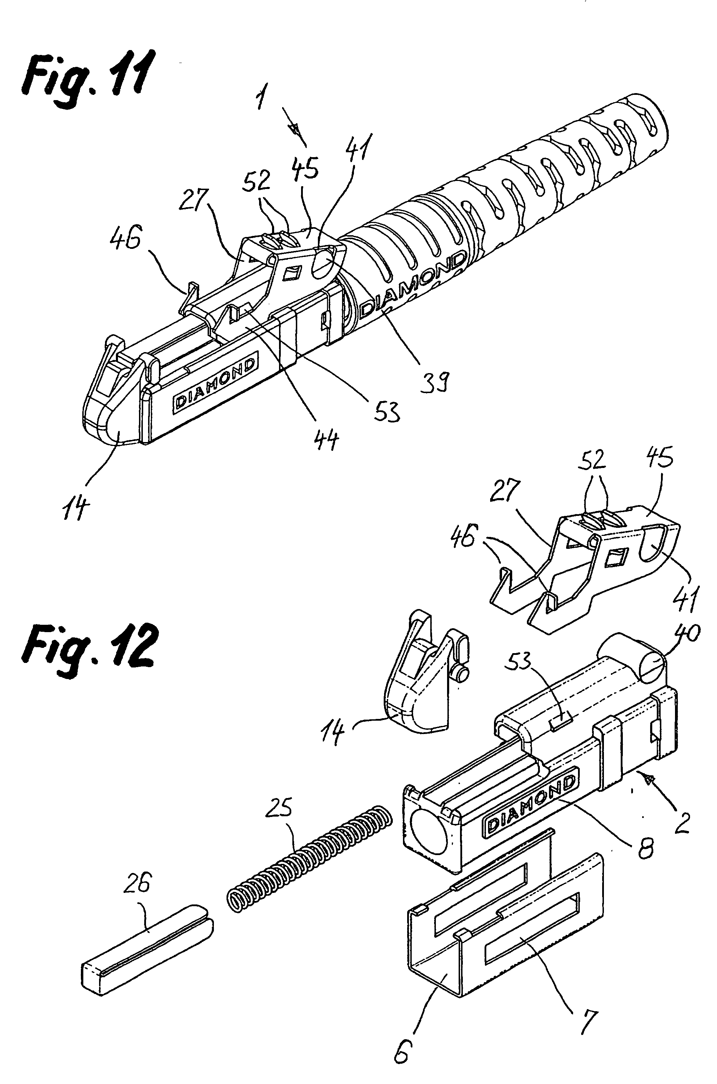

Das Sfeckerteil gemäss den Figuren 11 bis 13 unterscheidet sich vom vorhergehenden Ausführungsbeispiel primär durch eine alternative Bauart des Steckergehäuses und durch ein etwas modifiziertes Verriegelungselement. Letzteres verfügt am Griffstück 45 über abgewinkelte Schuppen 52, um die Griffigkeit zu verbessern. Ausserdem verlaufen die Abwinklungen an den Sperrklinken 46 annähernd im rechten Winkel zur Längsmittelachse des Steckerteils.

Das Steckergehäuse 2 ist nicht in zwei separate Teile aufgeteilt, sondern praktisch als Monoblockgehäuse ausgebildet. Demgemäss hat der Bügel 6 auch nicht noch zusätzlich die Funktion eines Verbindungselements. Er dient lediglich dazu, eine Führungsbahn für die Schutzklappe 14 zu bilden. Am Steckergehäuse sind Anschläge 53 angeordnet, welche mit den Seitenarmen 44 des Verriegelungselements zusammenwirken und welche die unter der Federvorspannung eingenommene Ruheposition des Verriegelungselements begrenzen.

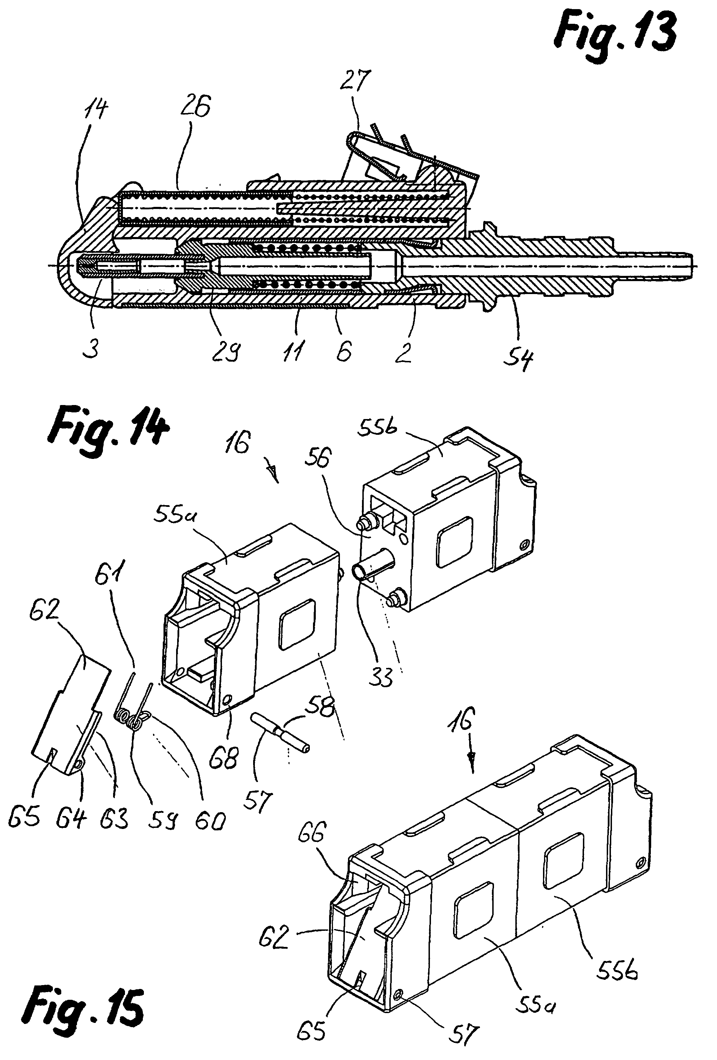

. Aus Figur 13 ist ersichtlich, dass auch die Lagerung und Fixierung des Steckerstifts 3 an der Stifthalterung 29 im Steckergehäuse etwas anders gelöst ist. Die Steckerinnenteile bilden dabei eine Kabelabschlusseinheit 54, welche zusammen mit der Schraubendruckfeder 11 vormontiert und in der richtigen Drehlage positionierbar in das Steckergehäuse 2 eingerastet werden kann.

In den Figuren 14 bis 16 ist beispielhaft ein Buchsengehäuse 16 etwas genauer dargestellt. Dieses besteht aus zwei identisch ausgebildeten Gehäusehälften 55a und 55b. An den Innenstirnseiten 56 sind diese Hälften mittels Zapfen und Bohrungen derart hermaphroditisch ausbildet, dass sie zusammengefügt und ggf. verklebt werden können. Die eigentliche Zentrierbuchse 33 zur Aufnahme der Steckerstifte 3 ist vorteilhaft schwimmend in einem Buchsenkäfig 67 gelagert. Die Gehäusehälften sind vorteilhaft als Spritzgussteile aus Kunststoffmaterial hergestellt. Die beiden Einstecköffnungen 47 sind mit aufschwenkbaren Schutzklappen 62 verschlossen, die beim Einstecken eines Steckerteils zurückweichen und die Buchse 33 freigeben. Die Schutzklappen, vorzugsweise als Biegeteile aus Metall hergestellt, verfügen über seitliche Abwinklungen 63, an denen Öffnungen 64 angeordnet sind. Das Gelenk wird durch eine Achse 57 gebildet, welche durch korrespondierende Lageröffnungen 68 am Buchsenteil und durch die Öffnungen 64 an der Schutzklappe eingeschoben werden kann.

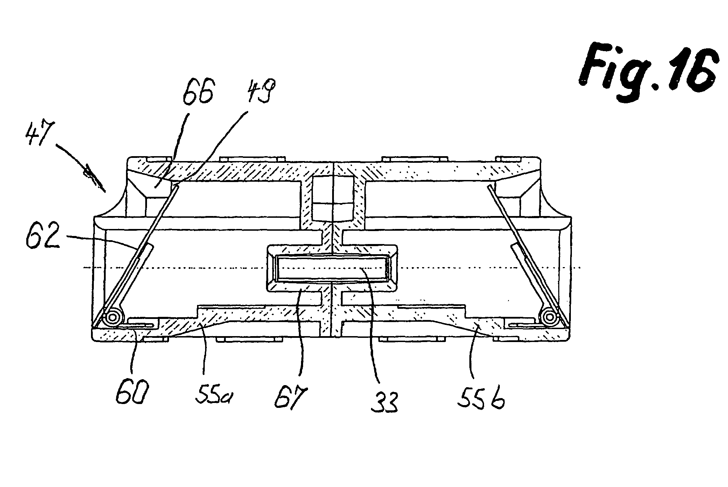

Jede Schutzklappe 62 wird über eine Feder 59 in die Schliessposition vorgespannt. Dazu verfügt die Feder über Federarme 61, welche sich an der Schutzklappe 62 abstützen und über einen integrierten Federfuss 60, der sich im Buchsenteil abstützt (Figur 16). Die Schliessposition der Schutzklappe 62 wird dabei durch seitliche Nocken 66 begrenzt, welche auch die Hinterschneidung 49 für das Verriegelungselement bilden.

Um die Achse 57 bezüglich ihrer seitlichen Relativlage zu fixieren, ist eine Nut 58 vorgesehen. Die Schutzklappe 62 verfügt über einen Sporn 65, der bei eingeschobener Achse 57 in die Nut 58 einrastet und damit die Achse seitlich fixiert. Eine derartige Schutzklappe an einem Buchsenteil lässt sich besonders einfach montieren und könnte auch im Zusammenhang mit konventionellen Steckverbindungen Anwendung finden.

## Patentansprüche

1. Steckerteil (1) für eine optische Steckverbindung mit einem Steckergehäuse (2), in dem wenigstens ein Steckerstift (3) gehalten ist und mit wenigstens einem federnden Verriegelungselement (27) zum zugfesten Verriegeln des Steckerteils in einem Buchsenteil (16) beim Erreichen der endgültigen Einsteckposition, wobei das Verriegelungselement (27) an einem Drehgelenk (39) schwenkbar am Steckerteil befestigt ist, **dadurch gekennzeichnet, dass** das Verriegelungselement (27) als einstückiges Biegeteil aus Metall ausgebildet ist, das auf das Steckergehäuse aufgeschnappt ist, mit zwei etwa parallelen Armen (44), an deren freien Enden Sperrklinken (46) angeordnet sind, mit einem die Arme verbindenden Griffstück (45) und mit einem am Griffstück angeordneten Federabschnitt (42), an dem sich das Verriegelungselement federnd auf dem Steckergehäuse (2) abstützt.

2. Steckerteil nach Anspruch 1, **dadurch gekennzeichnet, dass** das Steckergehäuse (2) ein Paar Gelenknocken (40) aufweist und dass das Verriegelungselement (27) ein Paar korrespondierende Ausnehmungen (41) aufweist, in welche die Gelenknocken eingreifen.

3. Steckerteil nach einem der Ansprüche 1 oder 2, **dadurch gekennzeichnet, dass** der Federabschnitt als Blattfeder (42) ausgebildet ist, deren eines Ende (43) auf dem Steckergehäuse (2) aufliegt und welche das Verriegelungselement (27) in eine Verriegelungsposition vorspannt.

4. Steckerteil nach einem der Ansprüche 1 bis 3, **dadurch gekennzeichnet, dass** die Sperrklinken (46) in der Form von Abwinklungen ausgebildet sind.

5. Steckerteil nach einem der Ansprüche 1 bis 4, **dadurch gekennzeichnet, dass** die Sperrklinken (46) Rampen bilden, an denen die Arme (44) beim Einstecken in ein Buchsenteil (16) gegen die Federkraft schwenkbar sind.

6. Steckerteil nach einem der Ansprüche 1 bis 5, **dadurch gekennzeichnet, dass** die Arme (44) beim Schwenken des Verriegelungselements (27) gegen die Federvorspannung wenigstens teilweise in korrespondierende Vertiefungen (15) am Steckergehäuse eintauchen.

7. Steckerteil nach einem der Ansprüche 1 bis 6, **dadurch gekennzeichnet**, das Verriegelungselement (27) am kabelseitigen Ende des Steckerteils angelenkt ist.

8. Steckerteil nach einem der Ansprüche 1 bis 7, **dadurch gekennzeichnet, dass** die unter der Federvorspannung eingenommene Ruheposition des Verriegelungselements durch wenigstens einen Anschlag am Steckergehäuse begrenzt ist.

9. Optische Steckverbindung mit wenigstens einem Steckerteil (1) nach einem der Ansprüche 1 bis 8 und mit einem Buchsenteil (16), das wenigstens eine Buchse (33) zur Aufnahme des Steckerstifts (3) aufweist, wobei die Sperrklinken des Verriegelungselements (27) beim Erreichen der endgültigen Einsteckposition in wenigstens eine Hinterschneidung (49) am Buchsenteil einrasten.

10. Steckverbindung nach Anspruch 9, **dadurch gekennzeichnet, dass** das Buchsenteil (16) einen Oberflächenabschnitt (50) über der Einstecköffnung (47) aufweist, der mit einem Oberflächenabschnitt am Griffstück (45) des Verriegelungselements einen stumpfen Winkel einschliesst, wobei die beiden Oberflächenabschnitte im wesentlichen stufenlos aneinander anschliessen.

11. Steckverbindung nach Anspruch 9 oder 10, **dadurch gekennzeichnet, dass** das Verriegelungselement zum zugfesten Eingreifen in das Buchsenelement ein Sperrklinkenpaar (46) aufweist, dessen rampenartige Aussenseite mit der Einstecköffnung (47) am Buchsenteil derart zusammenwirkt, dass das Verriegelungselement beim Einsteckvorgang gegen die Vorspannkraft geschwenkt wird.

12. Steckverbindung nach einem der Ansprüche 10 bis 11, **dadurch gekennzeichnet, dass** das Buchsenteil aus zwei gleichen Gehäusehälften zusammengesetzt ist, welche zwischen sich die Buchse (33) aufnehmen.

13. Steckverbindung nach einem der Ansprüche 10 bis 12, **dadurch gekennzeichnet, dass** wenigstens eine Einstecköffnung des Buchsenteils mit einer schwenkbaren Schutzklappe verschlossen ist, welche mittels einer das Buchsengehäuse und die Schutzklappe durchdringenden Achse angelenkt ist.

14. Steckverbindung nach Anspruch 13, **dadurch gekennzeichnet, dass** die Schutzklappe mittels einer Feder vorgespannt ist, welche auf der Achse sitzt.

15. Steckverbindung nach Anspruch 13 oder 14, **dadurch gekennzeichnet, dass** die Achse eine umlaufende Nut aufweist, und dass die Schutzklappe mit einem Sporn versehen ist, der zur seitlichen Fixierung der Achse in die Nut eingreift.

16. Steckverbindung nach einem der Ansprüche 13 bis 15, **dadurch gekennzeichnet, dass** die Schutzklappe als Biegeteil aus Metall ausgebildet ist.

17. Steckverbindung nach einem der Ansprüche 13 bis 16, **dadurch gekennzeichnet, dass** auf beiden Seiten der Einstecköffnung zwei Hinterschneidungen für die Sperrklinken des Verriegelungselements in der Form von Nocken angeordnet sind und dass die Schutzklappe bei ausgestecktem Steckerteil an den Nocken anliegt.

## Claims

1. Plug part (1) for an optical plug-and-socket connection, with a plug housing (2) in which at least one plug pin (3) is retained, and with at least one resilient locking element (27) for the pull-resistant retention of the plug part in a socket part (16) on reaching the final plug-in position, whereby the locking element (27) is pivotably fastened on the plug part by means of a pivot joint (39), **characterised in that** the locking element (27) is designed as a single-piece bent part made of metal, which is snap-fitted to the plug housing, with two approximately parallel arms (44) fitted with detent pawls (46) at their free ends, with a handle piece (45) joining the arms, and with a spring section (42) located on the handle piece, by means of which the locking element is resiliently supported on the plug housing (2).

2. Plug part according to claim 1, **characterised in that** the plug housing (2) comprises a pair of swivel cams (40) and **in that** the locking element (27) is provided with a pair of corresponding recesses (41) for engagement with the swivel cams.

3. Plug part according to claim 1 or 2, **characterised in that** the spring section is designed as a leaf spring (42), one end (43) of which rests on the plug housing (2), and which preloads the locking element (27) towards a locking position.

4. Plug part according to any of claims 1 to 3, **characterised in that** the detent pawls (46) are designed as offsets.

5. Plug part according to any of claims 1 to 4, **characterised in that** the detent pawls (46) form ramps on which the arms (44) are pivoted against spring force during insertion into a socket part (16).

6. Plug part according to any of claims 1 to 5, **characterised in that** the arms (44) dip at least partially into corresponding recesses (15) in the plug housing when the locking element (27) is pivoted against spring preload.

7. Plug part according to any of claims 1 to 6, **characterised in that** the locking element (27) is hinged on the cable end of the plug part.

8. Plug part according to any of claims 1 to 7, **characterised in that** the rest position of the locking element adopted under spring preload is limited by at least one stop on the plug housing.

9. Optical plug-and-socket connection with at least one plug part (1) according to any of claims 1 to 8 and with a socket part (16) comprising at least one socket (33) as a receptacle for the plug pin (3), whereby the detent pawls of the locking element (27) engages into at least one undercut (49) on the socket part on reaching the final plug-in position.

10. Plug-and-socket connection according to claim 9, **characterised in that** the socket part (16) has a surface section (50) above the plug-in opening (47), which encloses an obtuse angle with a surface section on the handle piece (45) of the locking element, whereby the two surface sections adjoin one another essentially steplessly.

11. Plug-and-socket connection according to claim 9 or 10, **characterised in that**, for pull-resistant engagement with the socket part, the locking element comprises a pair of detent pawls (46), the ramp-like exterior of which acts together with the plug-in opening (47) on the socket part in a manner that the locking element is pivoted against the preload during the insertion process.

12. Plug-and-socket connection according to any of claims 10 to 11, **characterised in that** the socket part is made up from two equal housing halves retaining the socket (33) between them.

13. Plug-and-socket connection according to any of claims 10 to 12, **characterised in that** at least one plug-in opening of the socket part is closed by a pivoting protective flap hinged on a shaft passing through the socket housing and the protective flap.

14. Plug-and-socket connection according to claim 13, **characterised in that** the protective flap is preloaded by a spring seated on the shaft.

15. Plug-and-socket connection according to claim 13 or 14, **characterised in that** the shaft has a continuous circumferential groove and **in that** the protective flap is provided with a spur engaging the groove for the lateral fixation of the shaft.

16. Plug-and-socket connection according to any of claims 13 to 15, **characterised in that** the protective flap is designed as a bent part made of metal.

17. Plug-and-socket connection according to any of claims 13 to 16, **characterised in that** two undercuts for the detent pawls of the locking element, which are designed as cams, are located on both sides of the plug-in opening, and **in that** the protective flap contacts the cams in the unplugged position of the plug part.

## Revendications

1. Connecteur (1) pour une connexion optique comprenant une enveloppe de connecteur (2) qui contient au moins une broche (3), et au moins un élément de verrouillage à ressort (27) pour le verrouillage résistant à la traction du connecteur dans un élément à douille (16) lorsque la position d'enfichage définitive est atteinte, l'élément de verrouillage (27) étant fixé au connecteur pour pouvoir pivoter sur une articulation tournante (39), **caractérisé en ce que** l'élément de verrouillage (27) est conçu comme une pièce pliée en métal d'une seule pièce qui est enclenchée sur l'enveloppe de connecteur et qui comprend deux bras (44) à peu près parallèles aux extrémités libres desquels sont disposés des crans d'arrêt (46), une partie formant poignée (45) qui relie les bras, et une section à ressort (42) qui est disposée sur la partie formant poignée et au niveau de laquelle l'élément de verrouillage s'appuie de manière élastique sur l'enveloppe de connecteur (2).

2. Connecteur selon la revendication 1, **caractérisé en ce que** l'enveloppe de connecteur (2) présente une paire de saillies d'articulation (40) et **en ce que** l'élément de verrouillage (27) présente une paire de creux correspondants (41) dans lesquels pénètrent lesdites saillies.

3. Connecteur selon la revendication 1 ou 2, **caractérisé en ce que** la section à ressort est conçue comme un ressort à lames (42) dont une extrémité (43) est posée sur l'enveloppe de connecteur (2) et qui contraint l'élément de verrouillage (27) dans une position de verrouillage.

4. Connecteur selon l'une des revendications 1 à 3, **caractérisé en ce que** les crans d'arrêt (46) ont la forme de parties repliées.

5. Connecteur selon l'une des revendications 1 à 4, **caractérisé en ce que** les crans d'arrêt (46) forment des rampes sur lesquelles les bras (44) sont aptes à pivoter à l'encontre de la force de ressort lors de l'enfichage dans un élément à douille (16).

6. Connecteur selon l'une des revendications 1 à 5, **caractérisé en ce que** lorsque l'élément de verrouillage (27) pivote à l'encontre de la contrainte de ressort, les bras (44) pénètrent au moins en partie dans des creux correspondants (15) de l'enveloppe de connecteur..

7. Connecteur selon l'une des revendications 1 à 6, **caractérisé en ce que** l'élément de verrouillage (27) est articulé sur l'extrémité du connecteur située côté câble.

8. Connecteur selon l'une des revendications 1 à 7, **caractérisé en ce que** la position de repos de l'élément de verrouillage qui est adoptée sous la contrainte du ressort est limitée par au moins une butée sur l'enveloppe de connecteur.

9. Connexion optique comprenant au moins un connecteur (1) selon l'une des revendications 1 à 8 et un élément à douille (16) qui comporte au moins une douille (33) destinée à recevoir la broche (3), les crans d'arrêt de l'élément de verrouillage (27) s'enclenchant dans au moins une contre-dépouille (49) de l'élément à douille lorsque la position d'enfichage définitive est atteinte.

10. Connexion selon la revendication 9, **caractérisée en ce que** l'élément à douille (16) présente au-dessus de l'ouverture d'enfichage (47) une section superficielle (50) qui forme un angle obtus avec une section superficielle de la partie formant poignée (45) de l'élément de verrouillage, une section superficielle faisant suite à l'autre sans gradations.

11. Connexion selon la revendication 9 ou 10, **caractérisée en ce que** l'élément de verrouillage présente, pour un accouplement résistant à la traction dans l'élément à douille, une paire de crans d'arrêt (46) dont le côté extérieur en forme de rampe coopère avec l'ouverture d'enfichage (47) de l'élément à douille de telle sorte que l'élément de verrouillage, lors de l'enfichage, pivote à l'encontre à la force de contrainte.

12. Connexion selon l'une des revendications 10 à 11, **caractérisée en ce que** l'élément à douille est composé de deux moitiés d'enveloppe identiques qui reçoivent entre elles la douille (33).

13. Connexion selon l'une des revendications 10 à 12, **caractérisé en ce qu'**au moins une ouverture d'enfichage de l'élément à douille est fermée à l'aide d'un. volet de protection pivotant qui est articulé à l'aide d'un axe qui traverse l'enveloppe à douille et ledit volet de protection.

14. Connexion selon la revendication 13, **caractérisée en ce que** le volet de protection est contraint à l'aide d'un ressort qui est placé sur l'axe.

15. Connexion selon la revendication 13 ou 14, **caractérisée en ce que** l'axe présente une rainure périphérique et **en ce que** le volet de protection est pourvu d'un éperon qui pénètre dans la rainure pour fixer l'axe latéralement.

16. Connexion selon l'une des revendications 13 à 15, **caractérisée en ce que** le volet de protection est conçu comme une pièce pliée en métal.

17. Connexion selon l'une des revendications 13 à 16, **caractérisée en ce que** des deux côtés de l'ouverture d'enfichage sont disposées deux contre-dépouilles pour les crans d'arrêt de l'élément de verrouillage, sous la forme de saillies, et **en ce que** le volet de protection est appliqué contre les saillies quand le connecteur est débranché.
